# EUROPEAN PATENT APPLICATION

(11) **EP 1 582 850 A2**
(43) Date of publication of application: **05.10.2005**
(21) Application number: 05102499.0
(22) Date of filing: 30.03.2005
(51) Int. Cl.: G01G 23/00

(54) **Method and apparatus for improving accurary of weighing measurements**

(30) Priority: 30.03.2004 FI 20040471
(71) Applicant: TAMTRON OY, 33561 Tampere (FI)
(72) Inventor: Asikainen, Pentti, 35800, Mänttä (FI)
(74) Representative: Kupiainen, Juhani Kalervo

(57) **Abstract**

The invention relates to a method and apparatus pertinent to improving the accuracy of weighing measurements. Specifically, the invention relates to a method and apparatus for improving the accuracy of weighing measurements by making use of geometric information. A weighing result is affected by the acceleration of earth gravity, which varies according to location and altitude. According to the Applicant's judgement, the best preferred embodiment of the invention comprises measuring geometric information directly by means of a cellular network (210) without satellite receivers and utilizing the same in the determination of a weighing system's location and thereby in the calibration of an acceleration of free fall (230, 240). The inventive methods and equipment enable a geometric information based precise calibration of weighing results, even when satellite positioning proves impossible, inconvenient or expensive.

## Description

### Technical field

The invention relates to a method and apparatus pertinent to improving the accuracy of weighing measurements. Specifically, the invention relates to a method and apparatus for improving the accuracy of weighing measurements by making use of geometric information.

### Background art

Weighing appliances consist typically of a weighing sensor and a display device. Weighing involves measuring a signal G = m * g. m (mass) is obtained from the formula by dividing the earth gravity (G) by the acceleration (g) of earth gravity. Thus, the acceleration of earth gravity is involved in the determination of a mass. The acceleration of earth gravity varies according to several factors, such as latitude or geographic altitude from sea level. Typically, the acceleration of earth gravity is taken into consideration in the process of tuning up scales equipment. It is prior knowledge, for example from publication EP 00631118 B1, incorporated herein as reference, that the geographic location would be taken into consideration in scales equipment by means of satellite positioning and the setup of a scales would be modified automatically according to information supplied e.g. by a GPS receiver included in the scales.

Scales appliances have become common in mobile equipment, scales devices are carried from place to place more and more and scales devices are being tuned up outside the actual location of use. Accordingly, there is an obvious demand for geometric information, but its utilization based on satellite positioning is difficult in many occasions. Satellite positioning systems, such as the GPS, contain interference added for strategic reasons and are also otherwise sensitive to interference and not suitable for indoors, such as basements and other such facilities. Moreover, satellite positioning necessitates installation of a satellite receiver in communication with a scales, increasing the scales' manufacturing costs.

Furthermore, methods of the prior art are primarily based on the determination of two weighing variables for calibrating a weighing procedure: location and altitude. A solution like this is known e.g. from publication EP 0631118 B1. However, the prior art methods also omit several factors with an active role in the acceleration of free fall and weighing results.

Transmission of weighing results in an information network is also known, from the Applicant's publication EP1239268 A1.

### Summary of invention

It is an objective of the invention to determine the location of a weighing system more reliably and cost effectively than in prior art systems. Another objective of the invention is to enable a location-based accurate weighing measurement in a mobile weighing system, even when geographic information is not available directly by measuring. It is also an objective of the invention to involve several previously undiscovered factors with an active role in a weighing result, and to provide a solution for neutralizing these error sources.

One idea of the invention has to do with the fact that the scales appliances in mobile equipment often include wireless data transfer devices, such devices being utilized in this invention. Thus, the determination of a location can be performed by using the same data transfer devices that are required in the appliance anyway and used to conduct a wireless data transfer in the same data transfer network. Hence, costs incurred by the acquisition of extra equipment are avoided and the improved accuracy of weighing results is achieved also indoors. Naturally, the arrangement is also suitable as such for scales appliances present in immobile locations and for scales appliances which are shipped to their actual service location after calibration and tuning.

In one preferred embodiment of the invention, the weighing system is in communication with a terrestrial wireless data transfer network. The wireless data transfer network is used to work out geographic information regarding the weighing system, for example by triangulation conducted by base stations or by other positioning methods. When the location is known, the acceleration of free fall at this location is determined. The determination of the acceleration of free fall can be effected in the actual weighing system or in a central server, with which the weighing system has preferably a wireless communication link. Based on this calibrated acceleration of free fall, the weights of masses to be weighed can be measured more accurately than before in a weighing system. Weighing results can be processed and transmitted forward both from the central server and from the weighing system itself. The use of a central server in the determination of the acceleration of free fall enables the utilization of an increased real-time quantity of information and an increased computation capacity. The determination effected in a weighing system can be preferred, e.g. when there is no need for high-level accuracy with earlier computation results available for utilization or when, for some reason, no communication link is available.

In one preferred embodiment of the invention, the geographic information need not be measurable all the time. In this embodiment, the geographic information, as well as other physical information about a weighing location, is stored in the memory of a weighing system or a central server. In the process of conducting a precise measurement, the weighing system can access the memory for geographic information and physical information relevant to the current measuring situation. For example, certain correction factors can be attached in a memory or database to a certain address or customer. For calibrating a weighing procedure, it is possible to seek the memory to select a closest possible piece of geographic information, say on the basis of time, or several geographic and/or physical points, between which is conducted interpolation for the determination of a relevant piece of geographic and/or physical information representing the measuring situation. Based on this information, it will thus be possible to measure a corrected weighing result.

In one preferred embodiment of the invention, an extremely accurate weighing result is accomplished by taking into consideration e.g. the attitude of a weighing system, soil composition, ground profile, the altitude of a weighing system's location from sea level, interferences and/or maintenance history.

The characterizing features of the invention are disclosed in the independent claims. Preferred embodiments of the invention are set forth in dependent claims.

According to the Applicant's judgement, the most advantageous aspect of the invention is the measurement of geographic information directly by means of a cellular network without satellite receivers and the utilization thereof in the determination of a weighing system's location.

### Description of drawings

The invention will now be described in slightly more detail with reference to an exemplary embodiment and the attached drawings, in which:
Fig. 1 shows a flow chart for one site-dependent weighing method of the invention in a wireless terrestrial data transfer network;
Fig. 2 shows a flow chart for one central-server type of site-dependent weighing method of the invention in a wireless terrestrial data transfer network;
Fig. 3 shows a flow chart for one site-dependent weighing method of the invention, based on electronic storage and memory;
Fig. 4 shows a flow chart for one central-server type of site-dependent weighing method of the invention, based on electronic storage and memory;
Fig. 5 shows a flow chart for one site-dependent weighing method of the invention making use of new calibration techniques and factors;
Fig. 6 shows a flow chart for one central-server type of site-dependent weighing method of the invention making use of new calibration techniques and factors;
Fig. 7 shows one weighing system of the invention in a block diagram;
Fig. 8 shows one central-server type of weighing system of the invention in a block diagram;
Fig. 9 shows one more sophisticated weighing system of the invention in a block diagram; and
Fig. 10 shows a block diagram for one central-server type of site-dependent weighing system of the invention making use of new calibration techniques and factors.

A few embodiments are set forth in the dependent claims.

### Detailed description of the invention by way of embodiments

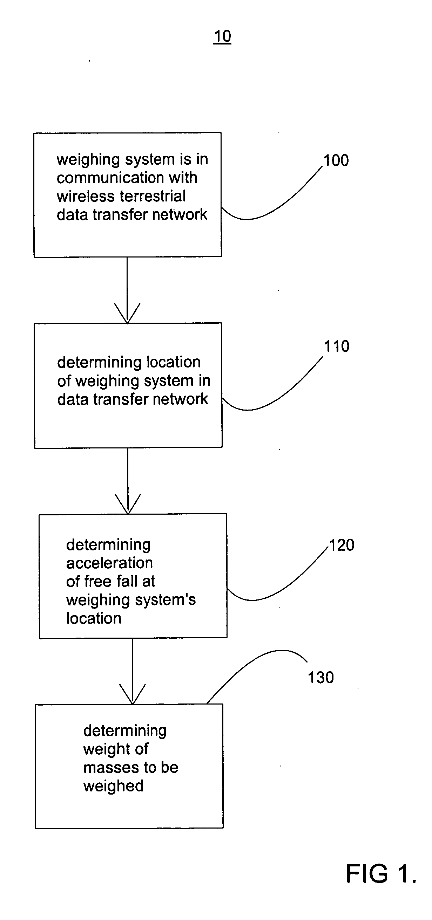

At stage 100 of the method shown in fig. 1, the weighing system is in communication with a terrestrial wireless data transfer network. The wireless terrestrial data transfer network can be, for example, a GSM-, GPRS-, EDGE-, WCDMA-, CDMA-, UMTS-, TDMA-, Bluetooth-, Tetra-, imode-, WLAN-, 3G- or 4G-compatible data transfer network, whereby the weighing system is provided with a transceiver compatible with the network. Typically, the weighing system further comprises a weighing sensor and, in certain cases, some memory space, a microprocessor for data processing operations, and a display.

At stage 110, the weighing system's location is determined in the wireless terrestrial data transfer network. A web site can be established on the basis of the name and/or code of a base station itself, or it can be optionally established by triangulation and/or algorithm as the signals of base stations present around the device are received in the wireless data transfer network. The web site can also be picked up from the system of an operator and/or service provider by requesting or accepting. At stage 120, the acceleration of free fall is determined at the weighing system's location. In some embodiments, the weighing system receives its geographic information from the network and compares its geographic information to free-fall acceleration correction factors stored in a memory, and thereby works out the acceleration of free fall most relevant to the location. Thereafter, stage 130 can be used for determining masses to be weighed in the weighing system, such that the effect of location on the acceleration of free fall has been taken into consideration. In some cases, the acceleration of free fall can be determined directly as the serving base station of data transfer equipment is used for the determination of a location. The name and/or code of the base station is used for concluding the location and this is used as a basis for determining the acceleration of free fall at this particular location.

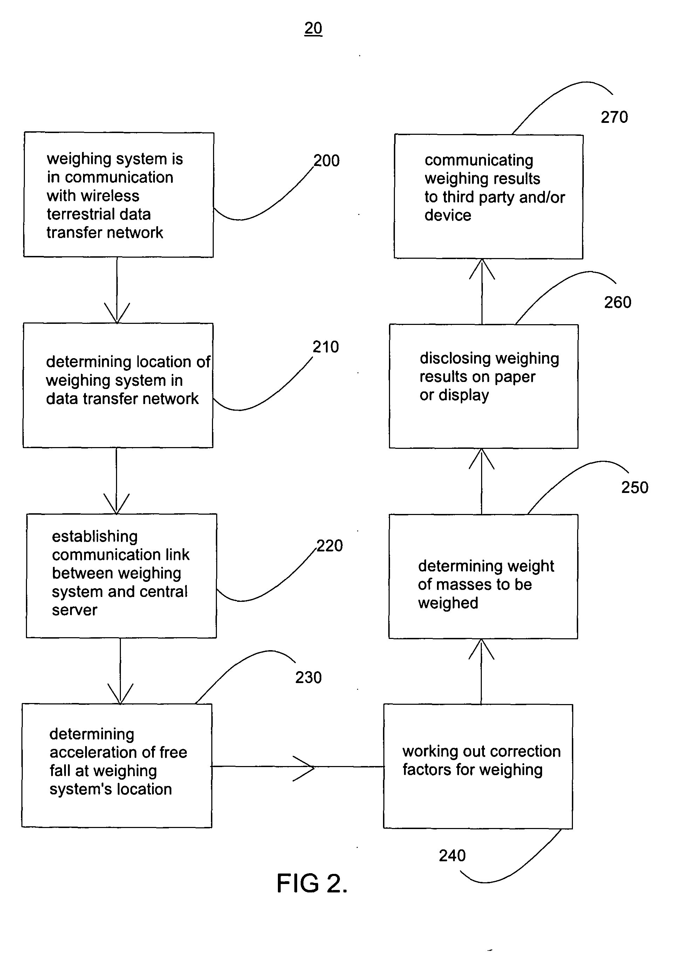

At stage 200 in fig. 2, the weighing system is in communication with a terrestrial wireless data transfer network. At stage 210, the weighing system's location is determined in the wireless terrestrial data transfer network. At stage 220, a communication link is established between the weighing system and a central server. This communication link is typically established by means of a wireless terrestrial data transfer link, such as a GSM-, GPRS-, EDGE-, WCDMA-, CDMA-, UMTS-, TDMA-, Bluetooth-, Tetra-, imode-, WLAN-, 3G-, 4G-compatible link, but also a hard-line communication link or a communication link established by means of a communication satellite with a central server is possible. A feasible example of these is an Immarsat or Iridium communication link. It is obvious that the very link, which is used for positioning a weighing system, can also be used for data transmission to a central server in accordance with the invention.

At stage 230, the acceleration of free fall existing at the weighing system's location is determined. The information required for the determination may be present in the weighing system or in the central server, in both of these, or it can be split between the central server and the weighing system. Likewise, the calculation of free fall acceleration can be performed either in the weighing system or in the central server entirely, or partially in both, at stage 240. Also other location-related information and other information with an impact on a measuring result can be taken into consideration in the process of calculating the acceleration of free fall to be applied or correction factors therefor. Factors to be taken into consideration include, for example: attitude of a weighing system, soil composition, ground profile, altitude of a weighing system's location from sea level, interferences and/or maintenance history.

At stage 250, the weight of masses to be weighed is determined on the basis of calibration as described above. At stage 260, the weighing system and/or the central server may output weighing results and other measurement-related data, such as calibration data, on a display or paper, for example by a printer. At stage 270, the weighing results and other measurement-related data, such as calibration data, can be communicated to a third party or device, for example by using e-mail, SMS- or MMS-messages, or over the Internet by presenting said information for example on a web site, or in a file which can be transferred in a variety of ways according to the invention, for example by means of the FTP (File Transfer Protocol). The measuring results and calibration data and other measurement-related data is preferably and according to the invention communicable in file mode within the Internet environment. Weighing results, correction factors and implemented corrections can be stored, output, or attached to weighing results or saved separately.

In some embodiments of the invention, the calibration of a weighing system is performed in at least one server and calibration results are transmitted to the weighing system along a wireless data transfer or communication link.

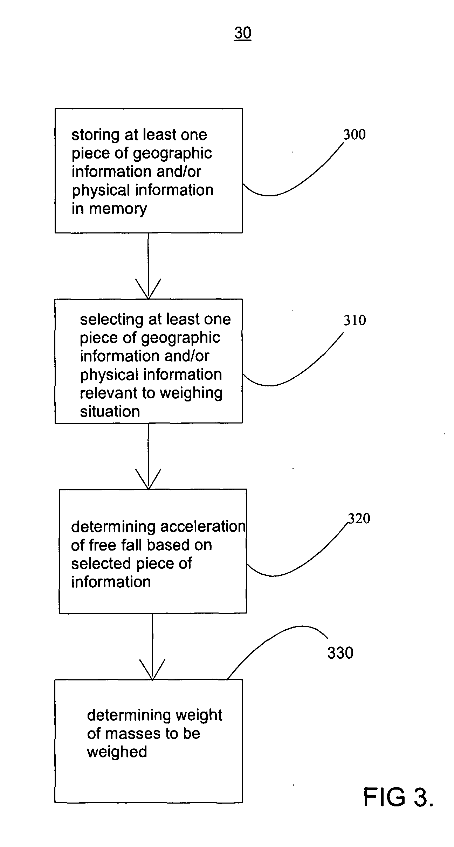

At stage 300 in fig. 3, at least one piece of geographic information and/or physical information regarding a weighing system is stored in a memory. The physical information may involve data regarding, for example, the attitude of a weighing system, soil composition, ground profile, the altitude of a weighing system's location from sea level, interference and/or maintenance history. According to the invention, the memory can be any electronic data storage, such as a ROM memory, a RAM memory, a Flash memory, a hard drive, a CD disk, an electromagnetic tape or the like. The information can also be recorded in the memory in a database and/or it can also be recorded in a file mode.

At stage 310, at least one piece of geographic information and/or physical information is selected from the memory. Selection can be made for example on the basis of time by selecting, for example, the most recently stored information, or on the basis of an information input performed by a certain user. In certain embodiments, the weighing system is fed for example with the name or address of a customer and this is used as a basis for retrieving a relevant piece of geographic and/or physical information from the memory. If the device is provided a digital map, a database or the like, it will be possible to have accurate physical information linked to a location. An address search, for example, is another way of obtaining information about a geographic location and physical conditions from a digital map, a database or history records, without positioning. Such information, jointly or severally with positioning information, can be utilized. When an appropriate piece of geographic information and/or physical information relevant to a weighing situation has been found out, the acceleration of free fall can be determined reliably at stage 320. Then, at stage 330, the weight of masses to be weighed can be determined with modifying factors caused by the environment taken into consideration in the measurement.

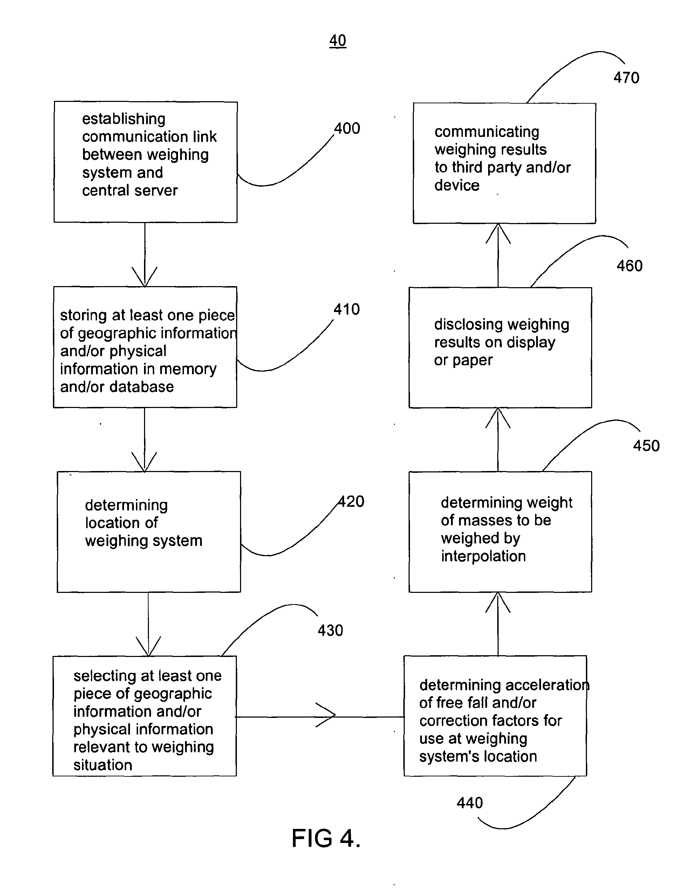

At stage 400 in fig. 4, a communication link is established between the weighing system and a central server. At stage 410, at least one piece of geographic information and/or physical information regarding the weighing system is stored in a memory and/or database in the central server and/or weighing system. At stage 420, the location is determined in a wireless terrestrial data transfer network or by means of a satellite. In some embodiments, the location is determined by triangulation performed by base stations in said wireless terrestrial data transfer network. At stage 430, at least one piece of geographic and/or physical information relevant to a weighing situation is selected from the memory, but reading from a database or a file is also possible according to the invention.

At stage 440, the acceleration of free fall and/or correction factors related thereto, which can be used at the weighing system's location, are determined. In some embodiments, effected by selecting several pieces of information relevant to a weighing situation, there may be a large number of these data points. At stage 450, these data points can be subjected to statistical operations, such as, for example, the determination of a default value by means of interpolation. Thus, the weighing of masses shall be conducted in such a way that the calibration takes many recorded data points into consideration and is accurate. At stage 460, the weighing system and/or the central server can output the weighing results and other measurement-related data, such as calibration data, on a display or paper for example by a printer. At stage 470, the weighing results and other measurement-related data, such as calibration data, can be communicated to a third party or device, for example in the Internet environment, by making use of various Internet protocols, such as HTTP, TCP/IP and/or FTP. The weighing system and/or the central server may also alert the user and request an approval in the event that a correction exceeds some fixed threshold. This is to ensure that no major errors shall occur and the reliability of an entire weighing process shall be improved.

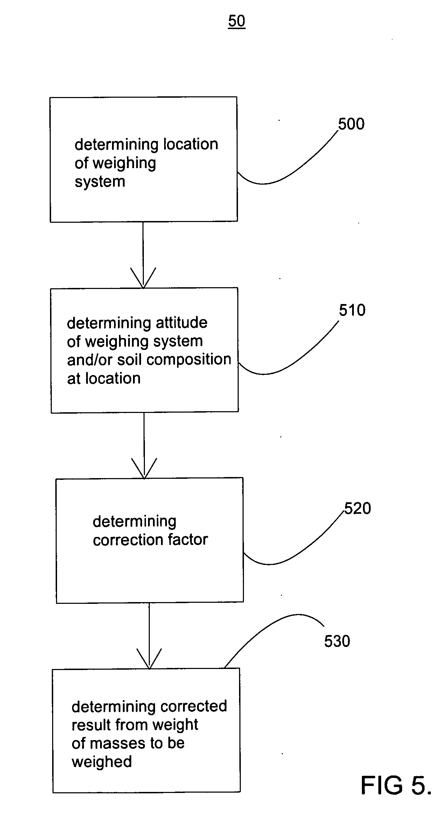

At stage 500 in fig. 5, the location of a weighing system is determined in a wireless terrestrial data transfer network or by means of a satellite, such as GPS or Galileo. At stage 510, the soil composition and/or the attitude of the weighing system are determined, for example on the basis of a location or a measurement, such as a measurement performed by means of a carpenter's level or bubble level. At stage 520, there is determined a correction factor caused by the above factors on a weight measurement. At stage 530, there is determined a corrected result regarding the weight of masses to be weighed.

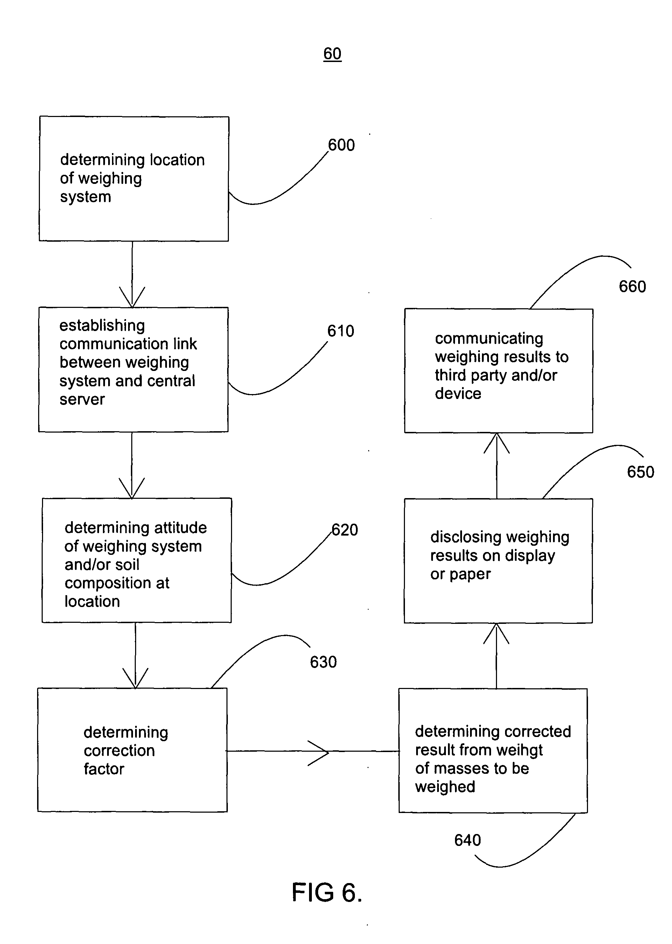

At stage 600 of the method shown in fig. 6, the location of a weighing system is determined in a wireless terrestrial data transfer network or by means of a satellite, such as GPS or Galileo, or by some other positioning method, for example land survey. At stage 610, a communication link is established between the weighing system and a central server. At stage 620, the soil composition and/or the attitude of the weighing system are determined, for example on the basis of a location or a local measurement, such as a measurement performed by a carpenter's level or bubble level or by a position sensor present in a weighing appliance itself. In some embodiments, the central server can have its map databases used for drawing conclusions about the soil composition as well as the attitude of the weighing system at a location. A digital map can be included in the weighing appliance itself or in the central system. The digital map or the database may contain highly accurate information about a location point. Special digital maps may even contain highly accurate information contributing solely to the accuracy of weighing. Such information is used for calculating a correction for the result of a weighing appliance in the appliance itself and/or in the central system. In case the weighing system is located on a mountain side, the angle of inclination can be concluded from a contour line on the map and the soil composition from a geological map of the region, in certain embodiments of the invention.

At stage 630, there is determined a correction factor taking into consideration the weighing system's attitude or the soil composition. In certain embodiments, the correction factor may also be adapted to consider the ground profile, the altitude of the weighing system's location from sea level, interferences and/or maintenance history, and of course the location. The correction factor can be determined in the weighing system and/or in the central server, partially or entirely. At stage 640, a corrected result is determined from the weight of masses to be weighed. At stage 650, the weighing results are output on a display, such as a monitor, or on paper by a printer. At stage 660, the weighing results and other measurement-related data, such as calibration data, can be communicated to a third party or device, for example in the Internet environment by utilizing various Internet protocols, such as HTTP, TCP/tP and/or FTP.

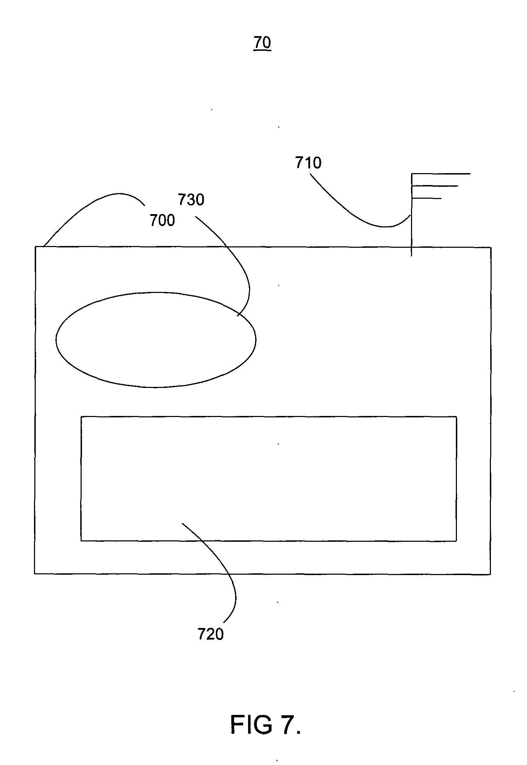

Fig. 7 shows a preferred weighing system 700 of the invention, which has a communication link to a wireless terrestrial data transfer network by way of a receiver and/or transmitter 710. In some embodiments, the transceiver 710 comprises a GSM-,GPRS-, EDGE-, WCDMA-, CDMA-, UMTS-, TDMA-, Bluetooth-, Tetra-, imode-, WLAN-, 3G-, 4G-compatible transceiver 710. In addition, the weighing system comprises at least one weighing sensor 720 for effecting the measurement of a mass weight. The sensor can be a panel type sensor for laying a mass to be weighed thereon, but the sensor can also be a hook type element for suspending a mass to be weighed thereon in some embodiments of the invention. In mobile equipment, the sensor configuration is realized by separate sensors connected to structures or by sensors integrated with structures or the weighing can also be effected by a separate scales appliance included in mobile equipment. In certain embodiments, the weighing system further comprises at least one display 730.

By means of the transceiver 710, the weighing system 700 can be conveniently located in a data transfer network. The location can be determined for example by triangulation conducted by base stations and/or algorithm in a wireless terrestrial data transfer network. Thus, the sensor 720 can be calibrated for the acceleration of free fall matching exactly the location and, hence, the measurements will be as accurate as possible at this very location. The transceiver 710 makes it also feasible for the weighing system to transmit and/or receive measurement-related data, such as weighing results or calibration data, by way of radio. In some embodiments, the weighing system also outputs said data for example on the display 730, which can be a TV-, monitor-, LCD-display, plasma-display or any other display unit, according to the invention.

It is obvious that the weighing system may comprise electronic equipment enabling the calibration of a weighing sensor. Such equipment may comprise for example a memory, a microprocessor, a logic circuit and various gauges, according to the invention.

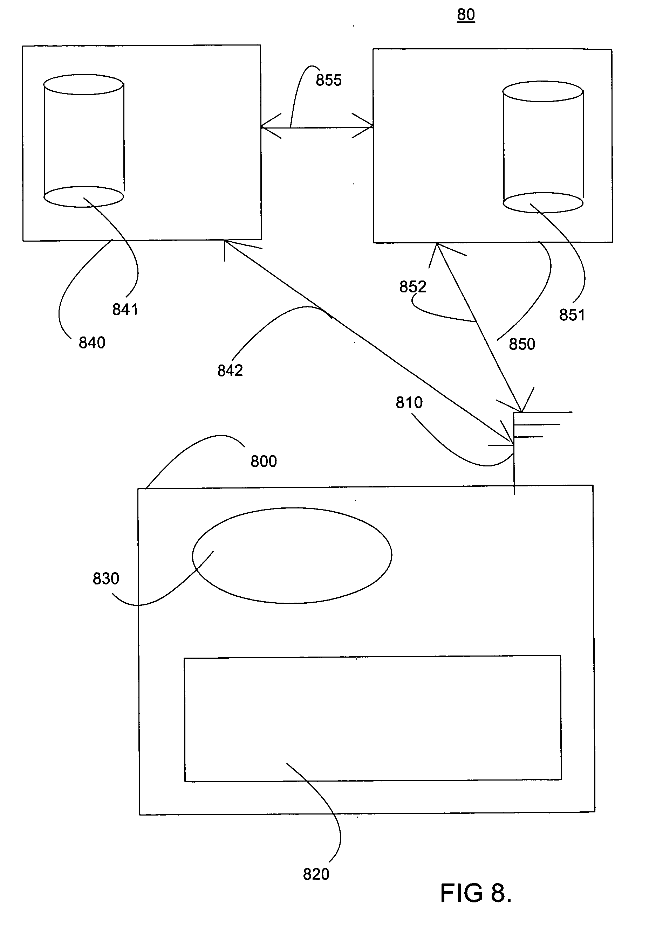

Fig. 8 illustrates a system of the invention in cooperation with server computers in a data transfer network. It is possible in one embodiment that the weighing system be provided with several central servers and/or the weighing system be in communication with several third parties and their devices like for instance server computers. However, for a simpler specification, we shall describe an embodiment, in which the data transfer of a weighing system 800 takes place between a central server 840 and a third party server 850.

The weighing system can transmit weighing results, location data, calibration data or the like both to the central server 840 and to the third party 850. In one embodiment, the location of a weighing system is determined in a data transfer network on the basis of a transceiver 810. The central server 840 receives from a wireless terrestrial data transfer network the geographic information regarding a weighing system, for example on the basis of triangulation performed by base stations. The wireless terrestrial data transfer network is a GSM-, GPRS-, EDGE-, WCDMA-, CDMA-, UMTS-, TDMA-, Bluetooth-, Tetra-, imode-, WLAN-, 3G-, 4G-compatible data transfer network in some embodiments of the invention. It is likewise feasible that communication links 842, 852 be established by means of a wireless terrestrial data transfer network which can be consistent with the above-described standards, or by other means.

Based on the geographic information, the central server and/or the weighing appliance calculates correction factors for the acceleration of free fall. In addition to geographic location, the central server and/or the weighing appliance can take into consideration other factors, such as the attitude of a weighing system, soil composition, ground profile, the altitude of a weighing system's location from sea level, interferences and/or maintenance history. These correction factors may then be transmitted by the central server to a weighing system 800 along the communication link 842. The weighing system may conduct a measurement on the basis of said corrected acceleration of free fall, according to the invention, and transmit the results to the central server 840. It is also possible that the results be assembled entirely in the central server 840. It is further possible that the results be assembled entirely in the weighing system 800 and the central server only be used for occasional calibrations, maintenance checks and the like. It is obvious that weighing results and/or other data related to weighing procedures can be output by the weighing system 800 and/or the central server 840 on at least one display 830 or these can be transmitted to the third party server 850. In certain embodiments, the servers 840, 850 are computers and provided with databases 841, 851. Thus, the weighing results and/or other data related to weighing procedures can be preferably processed for example in Internet environment, Intranet environment or in some other automated data processing environment, according to the invention.

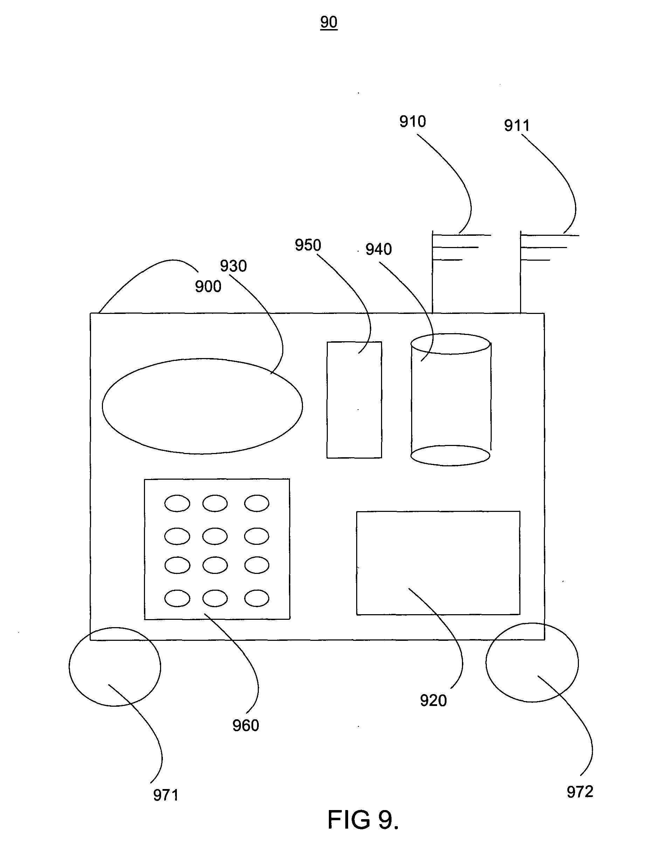

Fig. 9 illustrates a slightly more sophisticated weighing system 900 of the invention. The weighing system comprises at least one wireless communication link 910, 911 and a weighing sensor 920. In addition, the weighing system 900 is preferably provided with a keypad 960, a display 930, a processor 950, such as a mathematic or arithmetic processor, and a memory 940 which in certain embodiments may also contain a database. The memory is preferably stored with geographic information and/or physical information about the weighing system. The physical information may include for example their attitude of a weighing system, soil composition, ground profile, the altitude of a weighing system's location from sea level, interferences and/or maintenance history.

Storing is typically performed just shortly after the location has been determined, i.e. when the geographic information is fresh. After all, in certain embodiments according to the invention, the location of a weighing system can be determined by means of a satellite or by means of a wireless terrestrial data transfer network. Even in this case, a web-based determination of location can be provided as a backup. The transmitters, receivers or transceivers 910, 911 typically make this possible by means of either method. In certain situations, however, the location is not necessarily available as the scope of the invention covers also weighing systems 900, which are not provided with transceivers to enable positioning and even the positioning systems become occasionally disfunctional.

In this case, the weighing system 900 is adapted to retrieve the geographic and/or physical information from the memory and to conduct the calibration of a measurement for the acceleration of free fall and the weight by means of such information. The geographic information and/or the physical information can be retrieved from the memory 940 for example on the basis of an address, a customer, geographic history, the most recent piece of information or some other criterion. In certain embodiments of the invention, it is further possible to conduct the calibration of a measurement for the acceleration of free fall and the weight on the basis of several pieces of geographic and/or physical information selected from the memory, for example by means of interpolation or some other statistical operation, typically performed by the processor 950. In several embodiments, the weighing system 900 is also highly maneuverable, being provided for example with wheels 970, 971 or being very lightweight and thus portable.

In some embodiments, the weighing system can be in communication with at least one central server, a third party and/or device, as described in reference to fig. 8. It is possible, for example, that geographic and/or physical information be stored in a central server and in a database present therein, from which said information can be retrieved, whenever necessary, by way of radio or by other known data updating methods, such as file copying by way of a cable, by means of an updating disk or by other such means.

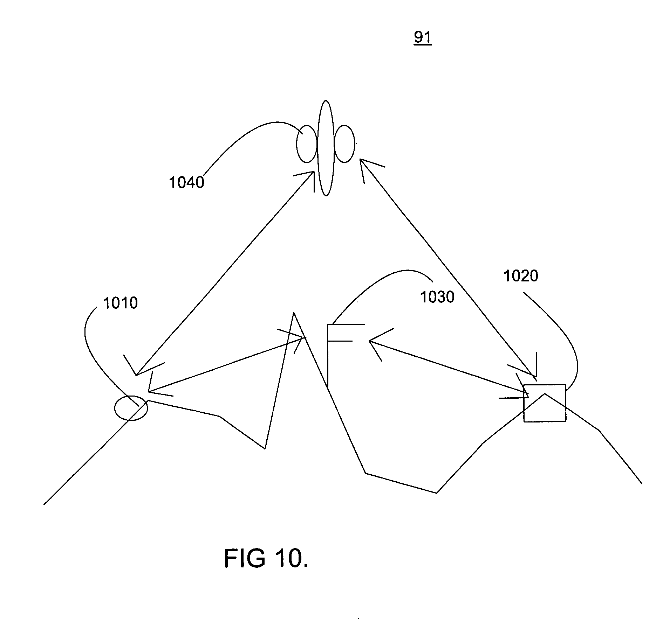

Fig. 10 illustrates a method and an apparatus, which enable taking into consideration several major factors in weighing measurements. A weighing system 1010 is by way of example located in mountains where angles of inclination and soil composition and/or ground profile are of major importance. The weighing system's location can be determined either by a satellite 1040 or by a wireless terrestrial network, having at least one base station thereof adapted to perform the positioning. Based on geographic information, the angle of inclination and/or the soil composition at the weighing system's 1010 location can be inferred by a central server and/or a weighing appliance. In satellite-based positioning, a direction is also obtained during the movement, which can also be utilized although the weighing indeed took place at a standstill, the final direction being namely the direction leading to standstills. This direction can be utilized along with map materials and/or database information in the determination of a location. The name of code or base stations transmitted by themselves can be utilized in web positioning. Thus, in addition to location, it is possible to infer a moving direction and to use it for upgrading the geographic and physical information. This is achieved for example by means of a map database, by comparing for example available contour lines and/or a geological map, by means of which a correction factor required by weighing is adapted to be assembled. The value measured by a central server 1020 can also be compared with locally detected values in weighing systems which are provided for example with a bubble level. Also other factors are adapted to be considered in the process of assembling a correction factor, such as ground profile, the altitude of a weighing system's location from sea level, interferences and/or maintenance history. The correction factor can be worked out either in the weighing system 1010 or in the central server 1020, partially, divisionally or entirely.

The weighing systems of the invention can be weighing systems present in mobile equipment (motor vehicles, loaders, reach trucks, airplanes, ships, etc.), portable devices, mobile weighing arrangements or immobile weighing arrangements.

The invention has been described above in reference to the disclosed embodiments and by presenting several commercial and industrial benefits of the invention. The inventive methods and equipment enable a geometric-information based precise calibration of weighing results, even when satellite positioning proves impossible, inconvenient or expensive. Several important, previously ignored factors are taken into consideration by the inventive method and apparatus, which factors contribute to a weighing result in a manner readily feasible in technical sense. In addition, the invention enables measurements, in which geographic information has been taken into consideration, even when the geographic information regarding a weighing system is not directly measurable. The invention provides mobility for weighing systems and enables smooth calibration at a new location.

The invention has been described above in reference to the disclosed embodiments. It is nevertheless obvious that the invention is not limited solely to these embodiments, but encompasses all embodiments within the inventive idea and spirit and the scope of the appended claims.

## Claims

1. A method for measuring a weight, comprising at least one weighing system, **characterized in that**
- the weighing system is in communication with a wireless terrestrial data transfer network (100, 200),
- the weighing system's location is determined by means of a wireless terrestrial data transfer network (110, 210),
- based on at least said location, the acceleration of free fall is determined at a location (120, 230) of the weighing system,
- based on at least said acceleration of free fall, a weight (130, 240, 250) is determined for masses to be weighed in the weighing system.

2. A method as set forth in claim 1, **characterized in that** the wireless terrestrial data transfer network comprises a GSM-, GPRS-, EDGE-, WCDMA-, CDMA-, UMTS-, TDMA-, Bluetooth-, Tetra-, imode-, WLAN-, 3G-or 4G-compatible data transfer network (100, 200).

3. A method as set forth in claim 1, **characterized in that** the location is determined by triangulation and/or algorithm in a wireless terrestrial data transfer network (110, 210).

4. A method as set forth in claim 1, **characterized in that** said weighing system is independent or in data transfer communication with at least one server over at least one wireless data transfer network (220).

5. A method as set forth in claim 1, **characterized in that** the weight determination for masses to be weighed is effected by also taking into consideration the attitude of a weighing system, soil composition, ground profile, the altitude of a weighing system's location from sea level, interferences and/or maintenance history (240).

6. A method as set forth in claim 1, **characterized in that** at least one weighing result, and a possible correction therefor, is worked out in a weighing system and/or in at least one server jointly or severally (240, 250).

7. A method as set forth in claim 1, **characterized in that** the weighing system and/or the at least one server can output at least one weighing result and/or correction on a display and/or communicate it to a third party or device along a data transfer link (260, 270).

8. A method as set forth in claim 1 and 4, **characterized in that** the calibration of a weighing system is performed in at least one server and/or in the weighing apparatus itself and the calibration results are transmitted to the weighing system along a wireless data transfer link.

9. A system for measuring a weight, comprising at least one weighing system, **characterized in that**
- the weighing system (700, 800, 900) comprises elements for establishing a communication link with a wireless terrestrial data transfer network (710, 810,910,911),
- the weighing system's location is adapted to be determined by means of a wireless terrestrial data transfer network,
- based on at least said location, the acceleration of free fall is adapted to be determined at the weighing system's location,
- the weight of masses to be weighed in the weighing system is adapted to be measured on the basis of at least said acceleration of free fall (720, 820, 920, 940, 950).

10. A system as set forth in claim 9, **characterized in that** the wireless terrestrial data transfer network comprises a GSM-, GPRS-, EDGE-, WCDMA-, CDMA-, UMTS-, TDMA-, Bluetooth-, Tetra-, imode-, WLAN-, 3G-or 4G-compatible data transfer network (842, 852).

11. A system as set forth in claim 9, **characterized in that** the location of said weighing system (700, 800, 900) is adapted to be determined by triangulation and/or algorithm in a wireless terrestrial data transfer network.

12. A system as set forth in claim 9, **characterized in that** said weighing system (700, 800, 900) comprises elements for establishing a communication link with at least one server (840, 850) over at least one wireless data transfer network.

13. A system as set forth in claim 9, **characterized in that** the weighing system (700, 800, 900) and/or the at least one server (840) comprises elements for taking into consideration the attitude of a weighing system, soil composition, ground profile, the altitude of a weighing system's location from sea level, interferences and/or maintenance history in the process of determining the weight of masses to be weighed.

14. A system as set forth in claim 9, **characterized in that** at least one weighing result is adapted to be worked out in the weighing system (700, 800) and/or in at least one server (840) jointly or severally.

15. A system as set forth in claim 9, **characterized in that** the weighing system (700) and/or the at least one server (840) comprises elements for outputting at least one weighing result and/or correction on a display (730, 830, 930) and/or for communicating the same to a third party or device along a data transfer link.

16. A system as set forth in claim 9 and 12, **characterized in that** the at least one server (840) comprises elements for calibrating a weighing system and for transmitting the calibration results to the weighing system along a wireless data transfer link.

17. A method for measuring a weight by means of at least one mobile weighing system and a memory, **characterized in that**
- at least one piece of geographic information and/or a piece of physical information are stored in a memory in the weighing system and/or in the memory of at least one server by way of a data transfer link (300, 410),
- at least one piece of geographic and/or physical information relevant to a weighing situation is selected from the memory (310, 430),
- based on at least one selected piece of geographic information and/or physical information, an acceleration of free fall (320, 440) is determined,
- based on at least said acceleration of free fall, a weight (330, 450) for masses to be weighed in the weighing system is determined.

18. A method as set forth in claim 17, **characterized in that** the weighing system's location and said geographic information are determined by means of a satellite or by means of a terrestrial wireless data transfer network.

19. A method as set forth in claim 17, **characterized in that** the data transfer link comprises a GSM-, GPRS-, EDGE-, WCDMA-, CDMA-, UMTS-, TDMA-, Bluetooth-, Tetra-, imode-, WLAN-, 3G- or 4G-compatible data transfer link.

20. A method as set forth in claim 17, **characterized in that** it comprises
- selecting several pieces of geographic information and/or physical information (430, 440) relevant to a weighing situation,
- working out a piece of geographic information and/or physical information relevant to the weighing situation by interpolating between the selected pieces of geographic information and/or physical information (450).

21. A method as set forth in claim 17, **characterized in that** the weighing system's geographic history is stored in a memory, along with its geographic and physical information (300, 410).

22. A method as set forth in claim 17, **characterized in that** the weighing system and/or the server automatically links certain geographic information and physical information to each other, such as a customer and correction factors or an address and correction factors.

23. A method as set forth in claim 17, **characterized in that** the at least one memory in the weighing system and/or in the server comprises at least one database for storing (410) geographic information and physical information therein.

24. A system for measuring a weight, comprising at least one mobile weighing system and a memory, **characterized in that**
- at least one piece of geographic information and/or physical information is adapted to be stored in a memory (940) of a weighing system (700, 800, 900) and/or in the memory of at least one server (840, 850) by way of a data transfer link,
- the system comprises elements for accessing a memory (950) for selecting at least one piece of geographic and/or physical information relevant to a weighing situation,
- the system comprises elements for determining the acceleration of free fall, based on the at least one selected piece of geographic and/or physical information (940, 950),
- the system comprises elements for determining (720, 820, 920) the weight of masses to be weighed in the weighing system, based on at least said determined acceleration of free fall.

25. A system as set forth in claim 24, **characterized in that** the weighing system (700, 800, 900) comprises elements for determining its location by means of a satellite (1040) or by means of a terrestrial wireless data transfer network.

26. A system as set forth in claim 24, **characterized in that** the data transfer link comprises a GSM-, GPRS-, EDGE-, WCDMA-, CDMA-, UMTS-, TDMA-, Bluetooth-, Tetra-, imode-, WLAN-, 3G- or 4G-compatible data transfer link.

27. A system as set forth in claim 24, **characterized in that** the system comprises elements (840, 850, 940, 950) for working out a piece of geographic information and/or physical information, relevant to a weighing situation, by interpolating between several selected pieces of geographic and/or physical information.

28. A system as set forth in claim 24, **characterized in that** the weighing system (700, 800, 900) and/or the server (840) comprises elements for storing the weighing system's geographic history in a memory (841, 851, 940) along with its geographic and physical information.

29. A system as set forth in claim 24, **characterized in that** the weighing system (700, 800, 900) and/or the server (840) comprises elements for automatically linking to each other certain geographic information and physical information, such as correction factors for a certain customer and weighing or correction factors for a certain address and weighing.

30. A system as set forth in claim 24, **characterized in that** the at least one memory (940, 841, 851) in the weighing system (700, 800, 900) and/or in the server (840, 850) comprises at least one database.

31. A method for measuring a weight by means of at least one weighing system, **characterized in that**
- location of the weighing system is determined (500, 600),
- based on at least said location, an attitude of the weighing system at the location and/or a soil composition at the location is determined (510, 620),
- based on the determined attitude and/or soil composition, a correction factor, which takes these factors into consideration, is determined (520, 630) in the weighing system,
- based on said correction factor, a corrected weighing result is worked out (530, 640) from at least one weight of a mass to be weighed in the weighing system.

32. A system as set forth in claim 31, **characterized in that** the weighing system is in communication with a server (610) and the correction factors are determined in the server and/or in the weighing system (630).

33. A system for measuring a weight, comprising at least one weighing system, **characterized in that**
- the location of a weighing system (700, 800, 900, 1010) is adapted to be determined and/or the weighing system comprises elements for disclosing its location (710, 810, 910, 911),
- based on at least said location, an attitude of the weighing system (700, 800, 900, 1010) at the location and/or a soil composition at the location is adapted to be determined,
- a correction factor, which takes these factors into consideration, is adapted to be determined in the weighing system (700, 800, 900, 1010) on the basis of said determined attitude and/or soil composition,
- a corrected weighing result from at least one weight of a mass to be weighed in the weighing system (700, 800, 900, 1010) is adapted to be worked out on the basis of said correction factor.

34. A system as set forth in claim 33, **characterized in that** the weighing system (700, 800, 900, 1010) comprises elements for establishing (710, 810, 910, 911) a communication link with a server (840, 1030) and the correction factors are adapted to be determined in the server and/or in the weighing system.
